**Europäisches Patentamt**

(19) **European Patent Office**

**Office européen des brevets**

(11) Veröffentlichungsnummer: **0 048 379**
**B1**

(12) **EUROPÄISCHE PATENTSCHRIFT**

(45) Veröffentlichungstag der Patentschrift:
31.07.85

(51) Int. Cl.⁴: **G 02 B 6/12**, G 02 B 6/26

(21) Anmeldenummer: **81107035.8**

(22) Anmeldetag: **07.09.81**

(54) Planare Wellenleiter-Bragg-Gitterstruktur und ihre Verwendung.

(30) Priorität: **23.09.80 DE 3035849**

(43) Veröffentlichungstag der Anmeldung:
**31.03.82 Patentblatt 82/13**

(45) Bekanntmachung des Hinweises auf die Patenterteilung:
**31.07.85 Patentblatt 85/31**

(84) Benannte Vertragsstaaten:
**DE FR GB**

(56) Entgegenhaltungen:
**US - A - 3 814 498**
**US - A - 4 198 117**

**IEEE SPECTRUM, Band 15, Nr. 12, 1978 D.B. ANDERSON "Integrated Optical Spectrum Analyzer: An Imminent Chip" Seiten 22 bis 29**
**IEEE TRANSACTIONS ON CIRCUITS AND SYSTEMS, Band CAS-26, Nr. 12, 1979 D.A. RAMEY et al. "Polyurethane Fan-Out Channel Waveguide Array for High Resolution Optical Waveguide Imaging" Seiten 1041 bis 1047**
**Preprint "Theory of Curved Diffraction Gratings" von Wilson und Bone, vorgetragen beim "Workshop of Integrated Optics", TU Berlin, 12.-13.5.1980**
**IEEE Transactions on Sonics and Ultrasonics", SU-14 (1967), S.123-134**

(73) Patentinhaber: **Siemens Aktiengesellschaft, Berlin und München Wittelsbacherplatz 2, D-8000 München 2 (DE)**

(72) Erfinder: **Auracher, Franz, Dr., Dipl.-Ing., Eichenstrasse 26, D-8021 Baierbrunn (DE)**
Erfinder: **Stockmann, Michael, Dipl.-Phys., Plievierpark 10, D-8000 München 83 (DE)**

## Beschreibung

Die Erfindung betrifft eine planare Wellenleiter-Bragg-Gitterstruktur nach den Oberbegriffen der Ansprüche 1, 2.

Für planare optische Komponenten werden häufig Linsen benötigt, die z. B. das Licht einer Laserdiode kollimieren oder kollimiertes Licht fokussieren. Ein typisches Beispiel ist ein integriert optischer Spektralanalysator, bei dem zunächst das von einer Laserdiode ausgehende Licht mittels einer ersten Linse kollimiert, dann in einer Ultraschall-Bragg-Zelle abgelenkt und schließlich mit einer zweiten Linse (Fourier-Linse) auf die Detektorzeile fokussiert wird. Da der Ablenkwinkel proportional der Frequenz ist, kann jedem Detektorelement ein bestimmtes Frequenzband zugeordnet werden. Als Wellenleiterlinsen sind Gitterlinsen in der Form von außeraxialen Bragg-Linsen von besonderem Interesse, weil sie in üblicher Planartechnik einfach und reproduzierbar herzustellen sind und sie einen hohen Beugungswirkungsgrad aufweisen.

Bisher wurden planare Wellenleiter-Bragg-Linsen nur mit geraden Gitterstrukturen hergestellt. Diese haben jedoch nur für einen sehr kleinen Akzeptanzwinkel-Bereich einen hohen Ablenkwirkungsgrad.

Aus dem »preprint« »Theory of Curved Diffraction Gratings« von M.G.F. Wilson et al., vorgetragen beim »Workshop on Integrated Optics«, TU Berlin, 12.—13. Mai 1980, ist eine Gitterstruktur mit spärisch gekrümmten Gitterfingern bekannt. Dise Gitterstruktur weist einen großen Akzeptanzwinkel-Bereich auf. Die Gitterfinger dieser Gitterstruktur haben alle dieselbe Krümmung. Benachbarte Gitterfinger dieser Gitterstruktur weisen jeweils denselben Abstand zueinander auf. Eine solche Gitterstruktur kann einen hohen Ablenkwirkungsgrad aufweisen. Darüber hinaus kann eine solche Gitterstruktur eine Fokussierung wie ein Hohlspiegel zeigen. Jedoch kann eine solche Gitterstruktur nicht gleichzeitig für einen großen Akzeptanzwinkel-Bereich einen hohen Ablenkwirkungsgrad und eine Fokussierung wie eine Linse aufweisen.

Der Erfindung liegt die Aufgabe zugrunde, eine planare Wellenleiter-Bragg-Gitterstruktur der eingangs genannten Art anzugeben, die zugleich für einen großen Akzeptanzwinkel-Bereich einen hohen Ablenkwirkungsgrad und eine Fokussierung wie eine Linse ermöglicht.

Diese Aufgabe wird erfindungsgemäß durch eine planare Wellenleiter-Bragg-Gitterstruktur nach dem Anspruch 2 gelöst.

In einer Ausbildung der Erfindung werden hintereinandergeschaltete, zueinander geneigte Gitterlinsen durch Kreisbögen verbunden und die geraden Gitterfinger durch Kreisbogensegmente ersetzt.

Anstelle mehrerer hintereinander angeordneter Linsen kann auch eine einzige dicke Linse mit gekrümmten Gitterfingern hergestellt werden, wobei bei verschiedenen Teilen der gekrümmten Gitterstruktur für jeweils unterschiedliche Einfallswinkel die Bragg-Bedingung entsprechend einem Ausführungsbeispiel nach Fig. 3 hinreichend genau erfüllt ist.

Bragg-Linsen weisen einen hohen Ablenkwirkungsgrad auf, d. h. sie werden im sogenannten Bragg-Bereich betrieben, wofür folgende Gleichung gilt:

$$Q = \frac{2\pi \cdot L\lambda}{d^2 \cdot \mu_0} \gg 1,$$

mit

$\lambda$: Wellenlänge des auf die Gitterstruktur einfallenden Lichtes,

L: Wechselwirkungslänge zwischen Gitterstruktur und einfallendem Licht,

d: Gitterabstand in dem Bereich der Gitterstruktur, in dem die Bragg-Bedingung für das einfallende Licht erfüllt ist,

$\mu_0$: Amplitude der nullten Fourier-Komponente der Brechungsindex-Verteilung im Wechselwirkungsbereich zwischen Gitterstruktur und einfallendem Licht.

Diese Definition des Bragg-Bereichs läßt sich beispielsweise der Veröffentlichung von W.R. Klein et al. in »IEEE Transactions on Sonics and Ultrasonics«, Vol. SU-14, No. 3, July 1967, pp. 123—134 entnehmen.

Bei den erfindungsgemäßen Ausbildungen einer planaren Wellenleiter-Bragg-Linse tritt das einfallende Licht jeweils nur mit der Gitterstruktur bzw. dem Teil der gekrümmten Gitterstruktur in starke Wechselwirkung, für die die Bragg-Bedingung erfüllt ist.

Wird eine erfindungsgemäße planare Wellenleiter-Bragg-Linse für ein planares optisches Bauelement mit Detektorelementen verwendet, so ist es zweckmäßig, das fokussierte Licht zunächst in der Brennlinie in Wellenleiter einzukoppeln und diese Wellenleiter zu den Detektorelementen zu führen. Insbesondere können dabei Streifenwellenleiter von der Brennlinie zu den Detektorelementen geführt werden.

Bei einer erfindungsgemäßen planaren Wellenleiter-Bragg-Linse können die hintereinander angeordneten Gitterstrukturen oder Teile der gekrümmten Gitterstruktur unterschiedliche Brennweiten haben. Insbesondere kann dabei die Brennlinie der gesamten Linsenstruktur senkrecht zur optischen Achse liegen.

Gitterlinsen sind in Planartechnik und somit mit hoher Maßhaltigkeit herstellbar, auch ihre Positionierung ist mit der in der Planartechnik üblichen Genauigkeit ($\leqq$ 1 μm) möglich.

In der Zeichnung werden eine typische Verwendung von Bragg-Linsen und zwei Ausführungsbeispiele gezeigt:

Fig. 1 zeigt den prinzipiellen Aufbau eines optischen HF-Spektralanalysators;

Fig. 2 zeigt eine gefächerte Wellenleiterstruktur GW zur Anpassung der Brennlinie BL einer erfindungsgemäßen Fourier-Linse FL an die Detektorzeile DZ;

Fig. 3 zeigt eine erfindungsgemäße Bragg-Linse mit gekrümmten Gitterfingern.

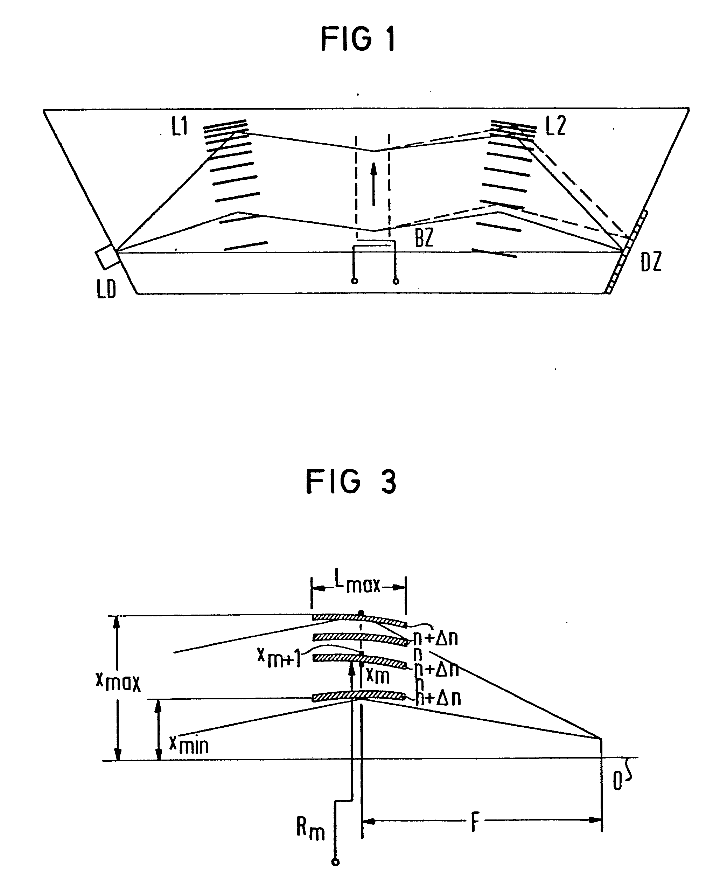

Für planare optische Bauelemente in Wellenleitertechnik werden häufig Linsen benötigt. Ein typisches Beispiel ist ein integriert optischer Spektralanalysator (Fig. 1), bei dem das von einer Laserdiode LD ausgehende Licht in einer ersten Linse L1 kollimiert, dann in einer Ultraschall-Bragg-Zelle BZ abgelenkt und schließlich mit einer zweiten Linse (Fourier-Linse) L2 auf die Detektorzeile DZ fokussiert wird. Als Linsen erscheinen Gitterlinsen besonders interessant, weil sie in Planartechnik auf einfache Weise mit guter Reproduzierbarkeit hergestellt werden können und die Justierung der Linse in bezug auf die Bragg-Zelle und die Detektorzeile mit hoher Genauigkeit erfolgen kann.

Zur Erzeugung von Gitterlinsen in Wellenleitern sind nur geringe Änderungen des Brechungsindex nötig. Gitterlinsen bieten sich daher auch für Substrate mit hohen Brechungsindizes, wie z. B. $LiNbO_3$ an. Für einen HF-Spektralanalysator wird von der Fourier-Transformationslinse ein hohes Auflösungsvermögen, d. h. ein hohes Öffnungsverhältnis und eine hohe optische Nebensprechdämpfung zwischen benachbarten Frequenzkanälen verlangt. Die letzte Forderung schließt axialsymmetrische Linsen aus, weil in diesem Fall das Signal überlagert ist von der 0.-Beugungsordnung und somit ein hohes Nebensprechen unvermeidlich ist.

Für HF-Spektralanalysatoren werden daher vorteilhafterweise nichtaxiale Linsen verwendet.

Von den Gitterlinsen ist die außeraxiale Bragg-Linse am geeignetsten; sie hat aber in der bisher bekannten Ausführungsform den großen Nachteil, daß sie nur für einen kleinen Einfallswinkelbereich einen guten Beugungswirkungsgrad zeigt. Im folgenden wird dieser Winkelbereich, bei dem parallel einfallendes Licht mit hohem Beugungswirkungsgrad fokussiert wird, als Akzeptanzwinkel der Bragg-Linse bezeichnet.

Der Akzeptanzwinkel bisher üblicher Bragg-Linsen mit geraden Fingern ist für Fourier-Linsen in breitbandigen optischen Spektralanalysatoren zu klein. Es wird hier erstmals eine neue Ausführungsform einer Bragg-Linse vorgeschlagen, bei der mehrere einfache Bragg-Linsen hintereinander und zueinander geneigt angeordnet sind, derart, daß sich aus der Überlappung der einzelnen Akzeptanzwinkel insgesamt ein wesentlich größerer Akzeptanzwinkel ergibt.

Verbindet man die einzelnen Gitterstrukturen durch Kreisbögen und ersetzt die geraden Gitterlinien ebenso durch Kreisbogensegmente, dann erhält man ein einziges, dickes Gitter mit kreisbogenförmigem Verlauf der Gitterfinger.

Die Brennpunkte für verschiedene Einfallswinkel liegen bei diesen zwei Linsentypen im allgemeinen auf einer gekrümmten Linie schräg zur optischen Achse, weil die für unterschiedliche Einfallswinkel ausgebildeten Gitterstrukturteile zwar für gleiche Brennweiten ausgelegt, aber hintereinander angeordnet sind. Die Detektorzeile bei Spektralanalysatoren müßte dann ebenfalls schräg zur optischen Achse liegen. Bei hochbrechenden Materialien, wie $LiNbO_3$, würde dann das Licht an der Grenzfläche $LiNbO_3$/Luft total reflektiert und nicht mehr in den Detektor einkoppeln. Es wird daher für diesen Fall eine Anordnung vorgeschlagen, bei der das fokussierte Licht zunächst in der Brennlinie in Streifenwellenleiter eingekoppelt wird und diese zu den Detektorelementen geführt werden, die jetzt in einer Linie senkrecht zur optischen Achse angeordnet sind.

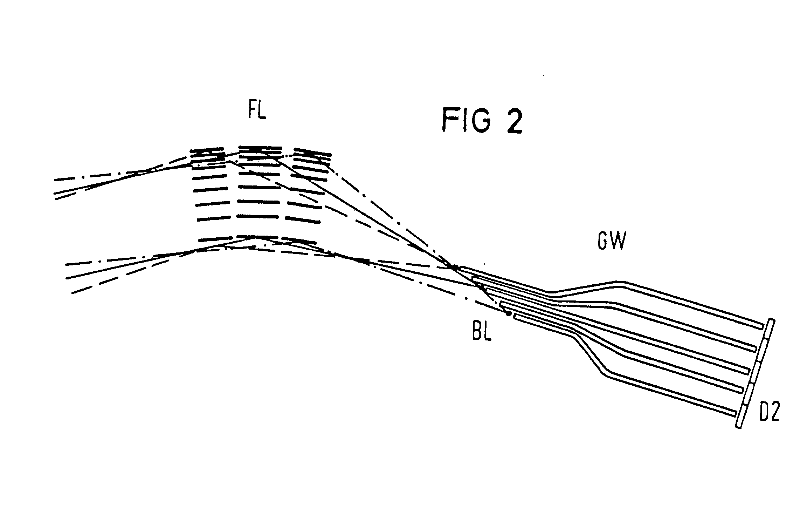

Die Wellenleiter können gleichzeitig aufgefächert werden, so daß auch eine Anpassung an Detektorzeilen mit größeren Detektorabständen möglich ist. Fig. 2 zeigt eine gefächerte Wellenleiterstruktur GW zur Anpassung der Brennlinie BL einer Fourier-Linse FL an die Detektorzeile DZ. Das auf die Fourier-Linse FL auftreffende Licht wird mittels dieser Fourier-Linse FL auf die Brennlinie BL fokussiert. Das auf diese Brennlinie BL fokussierte Licht wird sodann in die Wellenleiter der gefächerten Wellenleiterstruktur GW eingekoppelt und mittels dieser Wellenleiter an die Detektoren der Detektorzeile DZ weitergeleitet. Die Detektorzeile DZ ist dabei bezüglich der optischen Achse so angeordnet, daß unter Berücksichtigung des Brechungsindex des Substrates das Licht an der Brennfläche Substrat/Luft nicht total reflektiert wird, sondern vielmehr in die Detektoren der Detektorzeile DZ einkoppeln kann. Es wird darauf hingewiesen, daß die in Fig. 2 dargestellte Fourier-Linse FL eine erfindungsgemäße planare Wellenleiter-Bragg-Linse darstellt, bei der drei zueinander geneigte Gitterstrukturen für jeweils unterschiedliche Einfallswinkel hintereinander angeordnet sind, wobei sich die Einfallswinkelbereiche der einzelnen Gitterstrukturen überlappen.

Im folgenden werden die Linseneigenschaften nach der Theorie von M.G.F. Wilson und M.C. Bone: »Theory of Curved Diffraction Gratings«, preprint, für gekrümmte Gitter abgeschätzt und die Formeln zur Berechnung einer Linse mit kreisbogenförmigen Gitterstrukturen angegeben. Fig. 3 zeigt eine erfindungsgemäße Bragg-Linse mit gekrümmten Gitterfingern: $x_m$ ist der Abstand der Mitte der unteren Berandung des Gitterfingers (m, m + 1) von der optischen Achse O, wobei $x_{m+1} - x_m$ die Breite des Gitterfingers (m, m + 1) ist. $x_{min}$ und $x_{max}$ sind der kleinste und größte auftretende Abstand. $x_{max}$ ist dabei

der Abstand der Mitte der oberen Berandung des obersten Gitterfingers von der optischen Achse O. Die Werte $x_{min}$, $x_{max}$ hängen vom Öffnungsverhältnis Ö der Linse (F = Brennweite) ab:

$$\ddot{O} = \frac{x_{max} - x_{min}}{F} .$$

$\Theta_m$ bezeichnet den Bragg-Winkel für parallel zur optischen Achse einfallende Strahlen, die im Zentrum der Gitterfinger reflektiert werden. $L_m$ und $R_m$ sind Länge und Krümmungsradius des Gitterfingers (m, m+1). n bzw. $n + \Delta n$ geben schließlich den effektiven Brechungsindex des Wellenleiters bzw. der Gitterfinger an.

Im folgenden sind die Formeln zur Brechung einer Bragg-Linse mit gebogenen Gitterfingern aufgeführt. Gegeben seien die Werte für die Brennweite F, den minimalen und den maximalen Abstand der Mitten der oberen und unteren Berandungen der Gitterfinger von der optischen Achse $x_{min}$ und $x_{max}$, die Vakuumlichtwellenlänge $\lambda_0$, der Substratbrechungsindex n, und — für den Fall der Verwendung in einem HF-Spektralanalysator — die Schallgeschwindigkeit v der Substratoberflächenwellen und die HF-Bandbreite $\Delta$ f der Bragg-Zelle.

Die Mittenabstände der oberen und unteren Berandungen der Gitterfinger $x_m$ und die zugehörigen Bragg-Winkel $\Theta_m$ werden ebenso berechnet wie für Gitterlinsen mit geraden Fingern:

$$x_m = \sqrt{\frac{2m+1}{2} F \frac{\lambda_0}{n} + \left( \frac{2m+1}{4} + \frac{\lambda_0}{n} \right)^2} ,$$

$$\Theta_m = \frac{1}{2} \arctan \frac{x_m}{F} ,$$

$$x_{min} \leq x_m \leq x_{max}, \quad m \in \mathbb{N}.$$

Vom Akzeptanzwinkel $\Delta \varphi$ der Bragg-Linse hat man zu fordern, daß er gleich dem Ablenkbereich der Bragg-Zelle ist, also

$$\Delta \varphi = \frac{\lambda_0}{nv} \cdot \Delta f.$$

Jetzt können mit den Ergebnissen der zitierten Arbeit von Wilson und Bone die Länge $L_m$ und der Radius $R_m$ der Gitterfinger berechnet werden. Dabei ist ein theoretischer Ablenkwirkungsgrad (Intensität des abgelenkten Lichts/Intensität des einfallenden Lichts) von 99% vorausgesetzt. Die Berechnung der Formeln für andere Werte des Ablenkwirkungsgrades ist möglich. Außerdem ist angenommen, daß das Licht in der Linse nur einer Bragg-Reflexion unterliegt. Es ergibt sich

$$L_m = \frac{19}{c} \left( \frac{\Delta \varphi}{2 \Theta_m} + 1 \right),$$

$$R_m = \frac{19}{2 c \Theta_m} .$$

Dabei ist c die Koppelstärke der Bragg-Linse:

$$c = \frac{\Theta_{min}^2 \cdot 2 \cdot \pi n}{5 \lambda_0}$$

mit

$$\Theta_{min} = \frac{1}{2} \arctan \frac{x_{min}}{F} .$$

Aus der in der zitierten Theorie von Wilson und Bone angegebenen Definition für die Koppelstärke kann schließlich der für die Gitterfinger nötige Brechzahlunterschied $\Delta$ n berechnet werden:

$$c = \frac{\pi \cdot n \cdot \Delta \varepsilon}{\lambda_0 \cdot 2 \cdot \varepsilon_0 \cdot \cos \Theta_m} \approx \frac{\pi \cdot n \Delta \varepsilon}{\lambda_0 \cdot 2 \cdot \varepsilon_0} \quad \text{(für übliche Werte von } \Theta_m \text{)},$$

$$\Delta n = \sqrt{\varepsilon_0 + \Delta \varepsilon} - n ; \quad \varepsilon_0 = n^2 .$$

4

Die Gitterfingermitten der erfindungsgemäßen Bragg-Linse, wie sie in Fig. 3 gezeigt wird, liegen dabei auf einer Linie senkrecht zur optischen Achse. Die gekrümmten Gitterfinger dieser erfindungsgemäßen Bragg-Linse sind dabei zueinander geneigt. Diese Neigung der gekrümmten Gitterfinger zueinander entspricht dabei der Neigung der geraden Gitterfinger zueinander bei einer herkömmlichen Bragg-Linse, deren Gitterfingermitten dieselben Positionen aufweisen, wie die gekrümmten Gitterfingermitten der erfindungsgemäßen Bragg-Linse, wenn die Neigung der geraden Gitterfinger zueinander bei dieser herkömmlichen Bragg-Linse bewirkt, daß parallel zur optischen Achse einfallende Strahlen zum gleichen Brennpunkt hin abgelenkt werden.

Schließlich sei noch auf eine weitere Ausführungsmöglichkeit hingewiesen: Man kann die hintereinanderliegenden Linsen mit unterschiedlichen Brennweiten herstellen, derart, daß die Brennlinie der gesamten Linsenstruktur wieder senkrecht zur optischen Achse liegt. Ebenso können auch hier wieder die einzelnen geraden Gitterfinger durch kontinuierlich gekrümmte ersetzt werden, wobei eine einzige gekrümmte Gitterstruktur entsteht; die Krümmung dieser Gitterstruktur ist dann freilich nicht mehr kreisbogenförmig.

Die hier vorgeschlagenen verallgemeinerten Bragg-Linsen haben über einen großen Akzeptanzwinkel einen hohen Beugungswirkungsgrad.

## Patentansprüche

1. Planare Wellenleiter-Bragg-Gitterstruktur für einen großen Akzeptanzwinkel-Bereich mit hohem, im Bragg-Bereich liegendem Ablenkungswirkungsgrad, gekennzeichnet durch hintereinandergeschaltete, zueinander geneigte, feste, als Bragg-Linsen ausgebildete Gitterlinsen mit im Bragg-Bereich liegendem Ablenkungswirkungsgrad, bei der die Gitterlinsen gerade Gitterfinger aufweisen, mit progressiv sich veränderndem Abstand zwischen aufeinanderfolgenden Gitterfingern der jeweiligen Gitterlinse, bei der die Gitterfinger der jeweiligen Gitterlinse Mittenabstände $x_m$ ihrer unteren Berandung von der optischen Achse (O) gemäß

$$x_m = \sqrt{\frac{2\,m+1}{2}\;F\;\frac{\lambda_0}{n} + \left(\frac{2\,m+1}{4} + \frac{\lambda_0}{n}\right)^2}\,, \qquad (1)$$

$\lambda_0$: Vakuumlichtwellenlänge,
n: Substratbrechungsindex,
F: Brennweite einer Gitterlinse,

aufweisen und bei der die Gitterfinger der jeweiligen Gitterlinse so zueinander geneigt sind, daß der Bragg-Winkel $\Theta_m$, um den parallel zur optischen Achse (O) einfallende, im Zentrum des jeweiligen Gitterfingers mit dem Mittenabstand $x_m$ der unteren Berandung dieses Gitterfingers reflektierte Strahlen abgelenkt werden, folgenden Wert hat:

$$\Theta_m = \frac{1}{2}\arctan\frac{x_m}{F}\,. \qquad (2)$$

2. Planare Wellenleiter-Bragg-Gitterstruktur mit gekrümmten Gitterfingern für einen großen Akzeptanzwinkel-Bereich, mit hohem, im Bragg-Bereich liegendem Ablenkungswirkungsgrad, gekennzeichnet durch eine gekrümmte Gitterlinsenstruktur, bei der ausgehend von einer planaren Wellenleiter-Bragg-Gitterstruktur nach Anspruch 1 die gekrümmten Linien der Gitterfinger durch die Mittelpunkte mit den Mittenabständen $x_m$ der in Anspruch 1 festgelegten Gitterfinger verlaufen, diese letzteren ersetzen und so gerichtet sind, daß die in Anspruch 1 genannten Gitterfinger in diesen Mittelpunkten mit den Mittenabständen $x_m$ Tangenten an die gekrümmten Linien der Gitterfinger bilden würden.

3. Planare Wellenleiter-Bragg-Gitterstruktur mit gekrümmten Gitterfingern für einen großen Akzeptanzwinkel-Bereich, mit hohem, im Bragg-Bereich liegendem Ablenkungswirkungsgrad, gekennzeichnet durch eine gekrümmte Gitterlinsenstruktur, bei der ausgehend von einer planaren Wellenleiter-Bragg-Gitterstruktur nach Anspruch 1 die gekrümmten Linien der Gitterfinger durch jeweils einen einzigen Mittelpunkt mit jeweils einem Mittenabstand $x_m$ der in Anspruch 1 festgelegten Gitterfinger einer Gitterlinse verlaufen, diese letzteren ersetzen und so gerichtet sind, daß die in Anspruch 1 genannten Gitterfinger in diesen Mittelpunkten mit den Mittenabständen $x_m$ Tangenten an die gekrümmten Linien der Gitterfinger bilden würden, daß die gekrümmten Gitterfinger kreisbogenförmigen Verlauf aufweisen und daß die Mittelpunkte, die die Mittenabstände $x_m$ aufweisen, alle auf einer Geraden liegen.

4. Planare Wellenleiter-Bragg-Gitterstruktur nach Anspruch 1 oder 2, dadurch gekennzeichnet, daß die hintereinander angeordneten Gitterstrukturen oder Teile der gekrümmten Gitterstrukturen unterschiedliche Brennweiten haben.

5. Planare Wellenleiter-Bragg-Gitterstruktur nach Anspruch 4, daduch gekennzeichnet, daß die Brennlinie der gesamten Linsenstruktur senkrecht zur optischen Achse liegt.

6. Verwendung einer planaren Wellenleiter-Bragg-Gitterstruktur nach einem der Ansprüche 1 bis 3 für ein planares optisches Bauelement mit Detektorelementen, dadurch gekennzeichnet, daß von der Brennlinie zu den Detektorelementen Wellenleiter geführt sind.

7. Verwendung einer planaren Wellenleiter-Bragg-Gitterstruktur nach Anspruch 6, dadurch gekennzeichnet, daß von der Brennlinie zu den Detektorelementen Streifenwellenleiter geführt sind.

8. Verwendung einer planaren Wellenleiter-Bragg-Gitterstruktur nach Anspruch 6, dadurch gekennzeichnet, daß die Wellenleiter bei Detektorzeilen mit größeren Detektorabständen aufgefächert sind.

## Claims

1. A planar waveguide Bragg grating structure for a large range of acceptance angles, having high diffraction efficiency within the Bragg ranges, characterised by consecutively connected, fixed grating lenses tilted toward one another and designed as Bragg lenses having diffraction efficiency within the Bragg region, wherein the grating lenses have straight grating fingers with progressive change in the distance between consecutive grating fingers of the respective grating lens, wherein the grating fingers of the respective grating lens have centre-to-centre distances $x_m$ of their lower edge from the optical axis (O) in accordance with

$$x_m = \sqrt{\frac{2\,m+1}{2}\ F\ \frac{\lambda_0}{n} + \left(\frac{2\,m+1}{4} + \frac{\lambda_0}{n}\right)^2}\ ; \tag{1}$$

where:

$\lambda_0$: light wavelength in a vacuum;
n: refractive index of substrate;
F: focal length of a grating lens;

and wherein the grating fingers of each respective grating lens are tilted towards one another in such a manner that the Bragg angle $\Theta_m$, at which rays incident parallel to the optical axis (O) and reflected in the centre of the respective grating finger with the centre-to-centre distance $x_m$ of the lower edge of this grating finger are diffracted, has the following value:

$$\Theta_m = \frac{1}{2}\ \arctan \frac{x_m}{F}\ . \tag{2}$$

2. A planar waveguide Bragg grating structure having curved grating fingers for a large range of acceptance angles with high diffraction efficiency within the Bragg region, characterised by a curved grating lens structure, wherein starting from a planar waveguide Bragg grating structure as claimed in Claim 1, the curved lines of the grating fingers run through the centre points with the centre-to-centre distances $x_m$ of the grating fingers which are determined in Claim 1 and replace the latter, and are so oriented that the grating fingers which are referred to in Claim 1 would form tangents to the curved lines of the grating fingers in these centre points with the centre-to-centre distances $x_m$.

3. A planar waveguide Bragg grating structure having curved fingers for a large range of acceptance angles, with high diffraction efficiency within the Bragg region, characterised by a curved grating lens structure, wherein starting from a planar waveguide Bragg grating structure as claimed in Claim 1, the curved lines of the grating fingers respectively run through one single centre point with a centre-to-centre distance $x_m$ of the grating fingers of a grating lens which are determined in Claim 1, replace the latter and are so oriented that the grating fingers which are referred to in Claim 1 would form tangents to the curved lines of the grating fingers in these centre points with the centre-to-centre distances $x_m$, that the curved grating fingers have a circular course and that the centre points, which have the centre-to-centre distances $x_m$, are all arranged on a straight line.

4. A planar waveguide Bragg grating structure as claimed in Claim 1 or 2, characterised in that the consecutively arranged grating structures or parts of the curved grating structures have different focal lengths.

5. A planar waveguide Bragg grating structure as claimed in Claim 4, characterised in that the focal line of the entire lens structure is arranged at right angles to the optical axis.

6. Use of a planar waveguide Bragg grating structure as claimed in one of Claims 1 to 3 for a planar optical component with detector elements, characterised in that waveguides are directed from the focal line to the detector elements.

7. Use of a planar waveguide Bragg grating structure as claimed in Claim 6, characterised in that strip waveguides are directed from the focal line to the detector elements.

8. Use of a planar waveguide Bragg grating structure as claimed in Claim 6, characterised in that the waveguides are fanned out in the case of detector lines with large detector distances.

**0 048 379**

**Revendications**

1. Structure plane de réseau de Bragg formant guide d'ondes prévue pour une gamme étendue d'angles d'admission et comportant un rendement de déviation situé dans la région de Bragg, caractérisé par des lentilles à réseau fixes, disposées les unes derrière les autres, inclinées les unes par rapport aux autres et réalisées sous la forme de lentilles de Bragg et possédant un rendement de déviation situé dans la plage de Bragg, dans laquelle les lentilles à réseau possèdent des doigts rectilignes de réseau, l'écart entre des doigts successifs du réseau de la lentille à réseau respective variant progressivement dans laquelle les distances $x_m$ du centre du bord inférieur des doigts du réseau de la lentille à ces réseaux respectifs par rapport à l'axe optique (O) sont données par la relation:

$$x_m = \left| \sqrt{\frac{2m+1}{2} \, F \, \frac{\lambda_0}{n} + \left(\frac{2m+1}{4} + \frac{\lambda_0}{n}\right)^2} \right. \tag{1}$$

avec

$\lambda_0$: longueur d'onde de la lumière dans le vide,
n: indice de réfraction du substrat,
F: distance focale d'une lentille à réseau,

et que les doigts du réseau de la lentille respective à réseau sont inclinés les uns par rapport aux autres de telle sorte que l'angle de Bragg $\Theta_m$, dont sont déviés des rayons tombant parallèlement à l'axe optique (O) réfléchis au centre du doigt respectif du réseau dont le centre du bord inférieur est à la distance $x_m$ de l'axe optique, possède la valeur suivante:

$$\Theta_m = \frac{1}{2} \, \text{arctg} \, \frac{x_m}{F} \, . \tag{2}$$

2. Structure plane de réseau de Bragg formant guide d'ondes comportant des doigts de réseau cintrés, prévue pour une gamme étendue d'angles d'admission et possédant un rendement de déviation situé dans la région de Bragg, caractérisée par une structure cintrée de la lentille à réseau, dans laquelle, à partir d'une structure plane de réseau de Bragg formant guide d'ondes conforme à la revendication 1, les lignes courbes des doigts du réseau passent par les centres, situés aux distances $x_m$ par rapport à l'axe optique, des doigts du réseau fixés dans la revendication 1, remplacent ces derniers et sont dirigées de telle sorte que les doigts du réseau indiqués dans la revendication 1, passant en ces centres situés aux distances $x_m$ par rapport à l'axe optique, formeraient des tangentes aux lignes courbes des doigts du réseau.

3. Structure plane de réseau de Bragg formant guide d'ondes comportant des doigts de réseau cintrés, prévue pour une gamme étendue d'angles d'admission et possédant un rendement de déviation situé dans la région de Bragg, caractérisé par une structure cintrée de lentilles à réseau, dans laquelle à partir d'une structure plane de réseau de Bragg formant guide d'ondes conforme à la revendication 1, les lignes courbes des doigts de réseau passent respectivement par un seul centre situé à la distance $x_m$, par rapport à l'axe optique, des doigts du réseau d'une lentille à réseau, fixés dans la revendication 1, remplacent ces derniers et sont dirigées de telle sorte que les doigts du réseau, indiqués dans la revendication 1, formeraient, en ces centres situés aux distances $x_m$ par rapport à l'axe optique, des tangentes aux lignes courbes des doigts du réseau, que les doigts cintrés du réseau possèdent une allure en forme d'arc de cercle et que les centres, qui sont situés aux distances $x_m$ par rapport à l'axe optique, sont tous situés sur une droite.

4. Structure plane de réseau de Bragg formant guide d'ondes, suivant la revendication 1 ou 2, caractérisé par le fait que les structures de réseau disposées les unes derrière les autres ou les parties des structures du réseau cintrées possèdent des distances focales différentes.

5. Structure plane de réseau de Bragg formant guide d'ondes suivant la revendication 4, caractérisée par le fait que la droite focale de l'ensemble de la structure à lentilles est perpendiculaire à l'axe optique.

6. Utilisation d'une structure plane de réseau de Bragg formant guide d'ondes, suivant l'une des revendications 1 à 3 pour un composant optique plan comportant des éléments détecteurs, caractérisé par le fait que des guides d'ondes s'étendent depuis la droite focale jusqu'aux éléments détecteurs.

7. Utilisation d'une structure plane de réseaux de Bragg formant guide d'ondes suivant la revendication 6, caractérisée par le fait que des guides d'ondes en forme de bandes s'étendent depuis la droite focale jusqu'aux éléments détecteurs.

8. Utilisation d'une structure plane de réseau de Bragg formant guide d'ondes suivant la revendication 6, caractérisée par le fait que les guides d'ondes sont étalés en éventail dans le cas de lignes de détecteurs, dans lesquelles ces derniers sont à des distances assez importantes.

7

# FIG 1

# FIG 3

FIG 2